# EUROPÄISCHE PATENTSCHRIFT

(11) **EP 2 833 091 B1**
(45) Veröffentlichungstag und Bekanntmachung des Hinweises auf die Patenterteilung: **01.11.2017**
(21) Anmeldenummer: 14179026.1
(22) Anmeldetag: 30.07.2014
(51) Int. Cl.: F25D 31/00

(54) **Milchkühlvorrichtung zum Einsatz in oder mit einem Getränkebereiter**
Milk cooling device for use in or with a beverage preparing device
Dispositif de refroidissement de lait destiné à être utilisé dans ou avec un dispositif de préparation de boissons

(30) Priorität: 30.07.2013 DE 102013214903
(43) Veröffentlichungstag der Anmeldung: 04.02.2015
(73) Patentinhaber: WMF Group GmbH, 73312 Geislingen/Steige (DE)
(72) Erfinder: Arndt, Peter, 89134 Blaustein (DE); Göltenboth, Frank, 89134 Blaustein (DE)
(74) Vertreter: Pfenning, Meinig & Partner mbB

(56) Entgegenhaltungen:
- DE-U1-202006 014 208
- GB-A- 1 473 188
- US-A- 5 549 036

## Beschreibung

Die vorliegende Erfindung bezieht sich auf eine Milchkühlvorrichtung, die in einen Getränkebereiter, insbesondere eine Kaffeemaschine (insbesondere: einen Kaffeevollautomaten) eingebaut werden kann oder die in Verbindung mit einem solchen Getränkebereiter eingesetzt werden kann. Die Erfindung bezieht sich darüber hinaus auf einen entsprechenden Getränkebereiter, insbesondere eine entsprechende Kaffeemaschine mit eingebauter erfindungsgemäßer Milchkühlvorrichtung sowie auf ein Verfahren zur Milchkühlung unter Einsatz der erfindungsgemäßen Milchkühlvorrichtung bzw. des erfindungsgemäßen Getränkebereiters. Bei einem erfindungsgemäßen Getränkebereiter kann es sich beispielsweise um einen Getränkebereiter für warme oder kalte Milchmixgetränke (z. B. kalte Milchshakes) handeln. Die erfindungsgemäße Milchkühlvorrichtung kombiniert dabei eine Vorrats- und eine Durchfluss- bzw. Durchlaufkühlung.

Bei Kaffeevollautomaten sind Kaffeespezialitäten wie Cappuccino, Latte Macchiato oder Cafe Latte sehr beliebt. Hierzu wird Milch und Milchschaum benötigt, was eine Bevorratung von Milch in oder bei dem Kaffeevollautomaten notwendig macht. Aus Gründen der Haltbarkeit, Frische und Hygiene sollte Milch gekühlt aufbewahrt werden.

Kühlschränke bzw. Kältemaschinen in Kompressor- oder Peltiertechnologie sind aus dem Stand der Technik bekannt. Bekannt sind auch Kleinkühlschränke, in die Milch z.B. in einem Behälter (beispielsweise einem flüssigkeitsgefüllten Karton) mit oder ohne Deckel eingestellt werden kann. Um die Frische und Hygiene der offenen Milch bei der Aufbewahrung über einen längeren Zeitraum aufrechtzuerhalten, wird die Milch idealerweise bei 4°C gelagert, da hier eine Keimvermehrung gering ist.

Zudem kennt der Stand der Technik Kleinkühlschränke, die mit Rührwerken versehen sind (JP 58094361 A) sowie Durchlaufkühler für Getränke (beispielsweise CH 433 042, DE 20 2008 004 284 U1 oder WO 2009/082 198 A1).

Die DE 20 2006 014 208 U1 beschreibt eine Kühlvorrichtung zur Aufnahme eines Milchbehälters. Die Kühlvorrichtung weist eine Entnahmeeinrichtung zum Entnehmen von in dem Milchbehälter enthaltener Milch mit einer zum Anschließen an eine Pumpe geeigneten Milchansaugleitung, eine oder mehrere elektrische Aktoren und eine elektrische Stromversorgung auf.

Die US 5,549,036 beschreibt eine Kaffeemaschine in einem ersten Gehäuse sowie, in einem zweiten, vom ersten Gehäuse getrennten Gehäuse, einen Milcherzeugungsapparat. Zwischen den beiden Gehäusen kann Milch im Umlauf hin- und hergepumpt werden, so dass ein Verwenden von abgestandener Milch verhindert wird.

Die aus dem Stand der Technik bekannten Prinzipien haben jedoch für den Einsatz in Verbindung mit Kaffeemaschinen die folgenden Nachteile. Bei den bekannten Kühlschränken werden die Wände des Innenraums gekühlt, was wiederum die Innenraumluft abkühlt und somit das Aufbewahrungsgut (z.B. Milch) kühl hält. Da Luft jedoch kein guter Wärmeleiter ist, ist es daher schlecht möglich, die vorhandene Kälte der sich in diesem Innenraum befindenden, zu kühlenden Milch effektiv zuzuführen, um eine schnelle Abkühlung zu erreichen (insbesondere falls warme Milch nachgefüllt wird). Wird also keine vorgekühlte Milch verwendet, sondern eine Milchmenge von z.B. 4 Liter auf Raumtemperatur (20°C), so dauert es in der Regel sehr lange, also 6 Stunden oder länger, bis eine solche Milchmenge heruntergekühlt wird. Dasselbe gilt auch, wenn bei einer Restmenge warme Milch nachgefüllt wird. Es wird dann trotz aktiver Kühlung warme Milch verarbeitet, worunter die Milchschaumqualität leidet. Zudem schwankt die Ausgabetemperatur, da diese von der momentanen Bevorratungstemperatur abhängig ist. Schließlich verkeimen bei sehr langsam kühlender Bevorratung das Milchsystem und die Milch schneller.

Aufgabe der vorliegenden Erfindung ist es somit, eine Milchkühlvorrichtung, die zum Einbau in einen Getränkebereiter (insbesondere eine Kaffeemaschine) oder zum externen Anschluss an einen Getränkebereiter bzw. an eine Kaffeemaschine ausgebildet ist (die Milchkühlvorrichtung kann dabei insbesondere als Beistellgerät ausgebildet sein), zur Verfügung zu stellen, mit der eine zuverlässige und im Vergleich zum Stand der Technik schnellere Kühlung von Milch (insbesondere von vergleichsweise geringen Teilmengen des Milchvolumens) ermöglicht ist. Aufgabe ist zudem einen entsprechenden Getränkebereiter (insbesondere: Kaffeemaschine), in den/die eine solche Milchkühlvorrichtung eingebaut ist, und ein entsprechendes Milchkühlverfahren zum Kühlen von Milch vermittels einer erfindungsgemäßen Milchkühlvorrichtung zur Verfügung zu stellen. Die Erfindung soll ein schnelles Herunterkühlen von Milch von Raumtemperatur auf eine gewünschte Bevorratungstemperatur (beispielsweise: 4°C) ermöglichen. Zudem soll die Bevorratung der Milch bei konstanter Bevorratungstemperatur möglich sein, ohne dass Milch gefriert. Dabei soll eine Steigerung der Kühlleistung des Kühlsystems (um eine schnellere Abkühlung zu erreichen) nicht bzw. nur in geringem Ausmaß notwendig sein.

Die erfindungsgemäße Aufgabe wird durch eine Milchkühlvorrichtung gemäß Anspruch 1 sowie einen Getränkebereiter gemäß Anspruch 10 gelöst. Vorteilhafterweise zu realisierende Merkmale lassen sich den abhängigen Ansprüchen entnehmen. Dabei können diese vorteilhaften Merkmale gemäß der abhängigen Ansprüche in beliebigen Kombinationen miteinander realisiert sein. Nachfolgend wird die vorliegende Erfindung zunächst allgemein, dann anhand verschiedener Ausführungsbeispiele beschrieben. Die in den einzelnen Ausführungsbeispielen in Kombination miteinander gezeigten vorteilhaften Merkmale müssen dabei im Rahmen der Erfindung nicht in genau den gezeigten Kombinationen verwirklicht werden, sondern einzelne Merkmale können auch weggelassen werden oder mit Merkmalen anderer Ausführungsbeispiele in anderer als der gezeigten Weise kombiniert werden. Insbesondere können bereits einzelne der gezeigten Merkmale jeweils für sich eine Verbesserung des Standes der Technik darstellen.

Eine erfindungsgemäße Milchkühlvorrichtung ist in Anspruch 1 beschrieben.

Die Durchflusskühlanordnung ist gemäß der Erfindung somit zusätzlich zur Kältemaschine (bei der es sich beispielsweise um eine Kompressionskältemaschine oder um eine peltierelementbasierte Kältemaschine handeln kann, (vgl. Anspruch 5) ausgebildet. Die vorliegende Erfindung beschreibt somit eine Kombination einer Kältemaschine mit einer zusätzlichen Durchflusskühlung (nachfolgend alternativ auch als Durchlaufkühlung bezeichnet). Das Milchvolumen kann vermittels eines separaten Behältnisses (z.B. Milch-gefüllter Karton) in den Kühlraum eingebracht werden, indem dieses Behältnis in den Kühlraum eingestellt wird. Alternativ ist es auch denkbar, den Kühlraum als umbautes Volumen der Kältemaschine so vorzusehen, dass das Milchvolumen unmittelbar (über einen in den Kühlraum führenden Einfüllstutzen im Gehäuse der Kältemaschine) eingeleitet werden kann.

Damit das Durchflusskühlelement durch die Kältemaschine abkühlbar ist, kann es insbesondere innerhalb eines Gehäuses der Kältemaschine angeordnet sein, d.h. es kann eine integrierte Kühlung in zwei Stufen erfolgen: Eine innere Kühlung durch das Durchflusskühlelement ist in eine dieses umgebende, äußere Kühlung durch die Kältemaschine integriert. Bei dem Durchflusskühlelement kann es sich um ein wärmetauschendes oder wärmeübertragendes Element handeln, welches zum Kühlen ausgebildet und positioniert wird. Dabei kann es so ausgeführt sein, dass ein Kühlmedium (Kältemittel) parallel zum zu kühlenden Medium (Milch) fließt (Gleichstromprinzip), es kann so ausgeführt sein, dass ein Kühlmedium (Kältemittel) entgegen der Fließrichtung des zu kühlenden Mediums fließt (Gegenstromprinzip), und es kann so ausgeführt sein, dass ein Kühlmedium (Kältemittel) quer zur Fließrichtung des zu kühlenden Mediums fließt (Kreuzstromprinzip).

Dabei wird mit der Pumpe vorzugsweise ein Pumpkreislauf ausgebildet, die Durchflusskühlanordnung also so ausgebildet und angeordnet, dass die mit der Pumpe angesaugte, im Durchflusskühlelement geführte und aus letzterem wieder abgeleitete Milch bzw. Milchteilmenge in einem Kreislauf (also umlaufend) geführt bzw. gepumpt wird. Für ein solches mehrfaches Durchleiten (Umlaufführung) der Milch durch das Durchflusskühlelement hat letzteres bevorzugt einen Ausgang, der wieder in den Kühlraum führt, so dass die durch das Durchflusskühlelement hindurch gepumpte Milchteilmenge wieder in dasjenige Milchvolumen, aus dem sie mittels der Durchflusskühlanordnung entnommen wurde, zurückgeleitet wird. Der Ausgang (Ausflussleitung) des Durchflusskühlelementes ist bevorzugt oberhalb eines maximalen Füllvolumens für das Milchvolumen im Kühlraum positioniert. Dies ermöglicht ein Umkehren (Invertieren) der Pumprichtung zum Leerpumpen des Durchflusskühlelementes (Entfernen sämtlicher Milch aus diesem Elemente), ohne dass ein unerwünschtes Milchansaugen während der Umkehr der Pumprichtung erfolgt (vgl. hierzu auch die weiteren abhängigen Ansprüche).

Wird die Milch über eine solche Umlaufführung gekühlt, so ist in der Regel eine separate Ableitung der (gekühlten) Milch aus dem Milchvolumen bzw. dem Kühlraum zum Zuführen der abgeleiteten Milchmenge zur Kaffeemaschine bzw. zum Ausleiten derselben aus der Kaffeemaschine vonnöten. Hierzu kann die Milchkühlvorrichtung eine separate, zweite Pumpe aufweisen, mit der aus dem (zusätzlich zum durch die Kältemaschine selbst bewirkten Kühlen auch umlaufgekühlten) Milchvolumen Milch zur Kaffeemaschine abgeleitet oder aus der die Milchkühlvorrichtung umfassenden Kaffeemaschine (über eine Ausgabeeinheit derselben) abgegeben werden kann.

Statt mit einer zweiten Pumpe ist es jedoch auch möglich, die Milch dem Milchvolumen mittels einer als Abnahmerohr in eine Venturi-Düse der Kaffeemaschine mündenden Ausleitung (Schlauch oder dergleichen) zu entnehmen. Aufbau und Funktionsprinzip des Milchansaugens bzw. -aufschäumens mittels einer Venturi-Düse sind dem Fachmann bekannt, vgl. hier beispielsweise DE 10 2010 004 730 A1.

Unter Verzicht auf die zweite Pumpe kann die Umlaufführung der Milch mit der (ersten und einzigen) Pumpe auch so mit einem Umschaltelement kombiniert werden, dass je nach Stellung des Umschaltelementes entweder Milch weiter im Umlauf geführt und gekühlt wird oder zur Kaffeemaschine abgeleitet bzw. aus der die Milchkühlvorrichtung umfassenden Kaffeemaschine abgegeben wird (dies ist beispielsweise über ein Ventil und eine einfache T-Stück-Verzweigung als Umschaltelement möglich).

Anstelle einer Umlaufführung der Milch ist es jedoch ebenso möglich, die aus dem Milchvolumen entnommene Milchteilmenge nur einmalig durch das Durchflusskühlelement hindurch zu leiten und die dadurch gekühlte Milchteilmenge unmittelbar aus dem Durchflusskühlelement heraus zu leiten und der Kaffeemaschine (zur Abgabe an ein externes Gefäß wie z.B. eine Tasse oder dergleichen) zuzuleiten oder in eine Ausgabeeinheit dieser Kaffeemaschine zur Abgabe an das externe Gefäß abzuleiten.

Weitere vorteilhafterweise realisierbare Merkmale lassen sich Anspruch 4 entnehmen.

Bevorzugt ist dabei die Kombination der Merkmale gemäß der Ansprüche 3 und 4. Vorzugsweise ist die Pumpe abschaltbar oder die Pumprichtung dieser Pumpe für eine definierte Zeit (oder bis das Durchflusskühlelement, also die Milchleitung(en) darin, leergepumpt ist/sind) invertierbar, wenn die mittels des Temperatursensors im Milchvolumen erfasste Temperatur auf einen oder unterhalb eines vordefinierten Temperaturwertes (der vorzugsweise zwischen 3°C und 7°C und bevorzugt bei 4°C liegt) abgesunken ist.

Weitere vorteilhafterweise realisierbare Merkmale lassen sich Anspruch 2 entnehmen.

Der Kühlkörper wird nachfolgend alternativ auch als Thermoblock bezeichnet. Er muss nicht aus Kupfer und/oder Aluminium oder aus Legierungen dieser Metalle ausgebildet sein: Ganz allgemein kann für ihn jedes Material verwendet werden, das eine Wärmeleitfähigkeit (jeweils inklusive der Grenzwerte) zwischen 100 und 500 W/mK, bevorzugt zwischen 200 und 400 W/mK, aufweist.

Weitere vorteilhafterweise realisierbare Merkmale lassen sich den Ansprüchen 5 und 6 entnehmen.

Gemäß Anspruch 6 liegt durch das Hindurchleiten des Kältemittels (alternativ auch als Kühlflüssigkeit bezeichnet) somit ein aktiv gekühlter Kühlkörper vor. Dieser kann im Gehäuse (insbesondere in einer Wandung desselben) der Kältemaschine, also außerhalb des Kühlraums und außerhalb des Milchvolumens (aber gegebenenfalls unmittelbar angrenzend an den durch die Kältemaschine kühlbaren Kühlraum) positioniert werden. Die Steuerungen des Kompressors der Kompressionskältemaschine einerseits und der Pumpe der Durchflusskühlanordnung andererseits können so aufeinander abgestimmt werden, dass die Pumpe jeweils eingeschaltet wird, wenn der Kompressor zu arbeiten beginnt (oder bereits arbeitet) und jeweils ausgeschaltet wird, wenn der Kompressor aufhört zu arbeiten (oder gegebenenfalls auch unmittelbar bevor der Kompressor aufhört zu arbeiten oder unmittelbar nachdem er aufgehört hat zu arbeiten). Mit anderen Worten können die Einschaltzyklen des Kompressors und der Pumpe so aufeinander abgestimmt werden, dass beide Elemente jeweils während derselben Zeitintervalle arbeiten.

Weitere vorteilhafterweise realisierbare Merkmale lassen sich Anspruch 7 entnehmen. Die genannten Eigenschaften sind in beliebigen Kombinationen realisierbar. Die genannten Bereiche verstehen sich inklusive ihrer Grenzwerte.

Der (mittlere, in der Regel zwischen den beiden Ebenen, in denen die jeweiligen Leitungen verlaufen gemessene) Abstand der Leitung zum Durchleiten der Milchteilmenge einerseits und der Kältemittelleitung andererseits darf zum einen nicht zu groß gewählt sein (sonst erfolgt keine ausreichende Durchlaufkühlung der Milchteilmenge), zum anderen aber auch nicht zu klein gewählt sein (sonst friert die Milchteilmenge beim Durchleiten durch den Kühlkörper ein). Die optimalen Abstände können abhängig vom Material des Kühlkörpers im genannten Bereich leicht variieren.

Unter dem Temperaturverhalten des Kältemittels wird der Verlauf dessen Temperatur (über die Zeit) zwischen dem Einschalten des Kompressors und dem Ausschalten desselben verstanden.

Somit sind das Material des Kühlkörpers, der Abstand zwischen der Leitung zum Durchleiten der Milchteilmenge einerseits und der Kältemittelleitung andererseits, die Leitungsdurchmesser dieser Leitungen, die Fließgeschwindigkeit der Milch in ihrer Leitung innerhalb des Kühlkörpers und die mittels des Kompressors sowie gegebenenfalls auch des Temperatursensors erfolgende Temperatursteuerung des Kältemittels (sowie gegebenenfalls auch weitere die Milchtemperatur beeinflussende Größen wie die Kompressorleistung, die Eigenschaften der verwendeten Drosseleinrichtung usw.) so aufeinander abgestimmt, dass einerseits die Milchtemperatur in der Durchflussleitung im Kühlkörper nicht unter eine vorbestimmte minimale Temperatur absinkt (die so gewählt ist, dass ein Einfrieren der Milch verhindert wird), dass aber andererseits die dem Milchvolumen entnommene Milchteilmenge (und somit bei der Umlaufführung auch das Milchvolumen selbst) hinreichend schnell (beispielsweise 4 l Milch in weniger als 30 Minuten) abkühlbar ist. Die Temperatursteuerung kann dabei wie bereits angedeutet auch die vom Temperatursensor im Milchvolumen erfassten Temperaturwerte berücksichtigen.

Auch kann ein weiterer Tempersatursensor in/an der Leitung zum Durchleiten der Milchteilmenge (also im Kühlkörper) vorgesehen sein, mithilfe dessen Messergebnisse die Steuerung des Kältemittelkreislaufs, insbesondere des Kompressors und/oder der Drosseleinrichtung desselben, unmittelbar erfolgen kann, um die schnelle Abkühlung der Milch auf die vorbestimmte minimale Temperatur zur ermöglichen (und ein Absinken der Milchtemperatur darunter zu verhindern).

Wenn der Temperatursensor zum Erfassen der Temperatur im Milchvolumen in diesem Milchvolumen das Abkühlen auf besagte minimale Temperatur feststellt, kann das Durchleiten der Milch durch den Kühlkörper durch Abstellen der Pumpe beendet werden. Insbesondere kann zusätzlich vor dem Abstellen der Pumpe die Pumprichtung derselben invertiert (Pumpe läuft in Rückwärtsrichtung) werden, um noch in der Durchflusskühlanordnung bzw. dem Kühlkörper derselben befindliche Milch ins Milchvolumen zu entleeren. Hierzu ist es in der Regel notwendig, dass der milchableitende Ausgang des Kühlkörpers von oben in den Kühlraum oberhalb des maximal darin befindlichen Milchvolumens so einmündet, dass zwar durch den Kühlkörper in Vorwärtsrichtung (also beim Umlaufführen der Milch) durchgeleitete Milchteilmengen jeweils wieder in das Milchvolumen zurückgeleitet werden, dass aber beim Pumpen in Rückwärtsrichtung keine Milchteilmenge mehr aus dem Milchvolumen angesaugt werden kann.

Sofern im Kühlkörper zwischen der/den hindurchgeführten Milchleitung(en) einerseits und der/den Kühlmittelleitung(en) andererseits ein Abstand notwendig ist (um ein Einfrieren der Milch in der/den Milchleitung(en) zu verhindern), der so groß ist, dass er sich bauartbedingt (unerwünschte Größenzunahme der Milchkühlvorrichtung) nur schwer umsetzen lässt, kann in den Kühlkörper eine Kälteisolationsschicht zwischen der/den Milchleitung(en) einerseits und der/den Kühlmittelleitung(en) andererseits eingearbeitet sein.

In einer vereinfachten Variante kann der Kühlkörper auch weggelassen werden oder genauer gesagt als luftgefülltes Hohlelement ausgebildet werden, so dass die Leitung zum Durchleiten der Milchteilmenge (Milchleitung) in einem vordefinierten Abstand zur Kältemittelleitung in Luft geführt ist. In diesem Fall sollte der Abstand zwischen den beiden Leitungen in der Regel auf einen Wert zwischen 0 mm und 5 mm verringert werden, um noch eine hinreichende Kühlung der Milchteilmenge in der Milchleitung durch das Kühlmittel in der Kühlleitung zu gewährleisten. Der Abstand ist abhängig von der Wärmeleitfähigkeit des Kühlkörpers, der Leitungslänge und der Fließgeschwindigkeit. Auch sind bei der Leitungsführung aus dem Kühlkörper Varianten denkbar wie dass sich Leitungen berühren, dass Leitungen einen geringen Abstand haben oder dass Leitungen mit Blech verbunden sind.

Weitere vorteilhafterweise realisierbare Merkmale lassen sich den Ansprüchen 8 und 9 entnehmen.

Auch bei Anspruch 9 beinhalten die angegebenen Bereiche ihre Bereichsgrenzen.

Dabei liegt aufgrund des Fehlens des Hindurchleitens von Kältemittel durch den Kühlkörper (im Falle einer Kompressionskältemaschine) ein passiv gekühlter Kühlkörper vor. Dieser Kühlkörper ist bevorzugt so ausgebildet, dass seine Ausleitung (zum Ableiten der gewünschten, zum Getränkezubereiten zu verwendenden Milchteilmenge aus dem Durchflusskühlelement) durch die Gehäusewandung der Kältemaschine hindurch in die Kaffeemaschine führt bzw. durch letztere Gehäusewandung hindurch und aus der die Milchkühlvorrichtung umfassenden Kaffeemaschinen heraus führt. Der Kühlkörper kann somit so positioniert werden, dass er passiv durch die im Kühlraum herrschende Lufttemperatur gekühlt wird.

Dabei kann der Kühlkörper hinsichtlich des verwendeten Materials, seines Aufbaus und seiner Geometrie so ausgebildet sein, dass er die Kälte gut leitet (Wärmeleitfähigkeit von mindestens zwischen 100 und 500 W/mK, bevorzugt zwischen 200 und 400 W/mK). Die Länge(n), Durchmesser und Flussgeschwindigkeit(en) (letzteres gesteuert durch die Pumpe) in/von der/den Milchleitung(en) im Kühlkörper kann/können so auf die Größe des, das Material des und die Form des Kühlkörpers abgestimmt sein, dass die Temperatur des Kühlkörpers nach Hindurchleiten einer zu entnehmenden Milchteilmenge hinreichend schnell (beispielsweise unter einer Minute) wieder die vordefinierte Zieltemperatur (von beispielsweise 4°C) im Kühlraum erreicht. Diese Zeit, in der der durch das einmalige Entnehmen einer Milchteilmenge und Hindurchleiten derselben durch den Kühlkörper erwärmte Kühlkörper wieder auf die im Kühlraum herrschende Temperatur kommt, kann so eingestellt werden, dass sie kleiner ist, als diejenige Zeit, die ein Benutzer der Kaffeemaschine zwischen dem Zubereiten zweier milchbasierter Kaffeespezialitäten benötigt. Die Abstimmung kann dabei so erfolgen, dass auch eine dem Milchvolumen entnommene Milchteilmenge, die merklich wärmer als die im Kühlraum herrschende Temperatur ist (z.B. wenn die Milchteilmenge kurz nach einem Nachfüllen von Milch entnommen wird), durch das (einmalige) Durchleiten durch den Kühlkörper ausreichend gekühlt wird.

Die Steuerung der Milchkühlvorrichtung (die ganz generell bei jeder Ausführungsform mikroprozessor- oder mikrocontrollerbasiert durch geeignete Steuerprogramme in einem Speicher der Milchkühlvorrichtung erfolgen kann) kann auch die von einem weiteren am Kühlkörper angebrachten Temperatursensor erfassten Temperaturwerte berücksichtigen: Erst wenn die erfasste Temperatur des Kühlkörpers wieder auf die Ziel- bzw. Solltemperatur im Kühlraum abgesunken ist, wird die nächste Milchteilmenge zum Ausleiten freigegeben.

Als Kältemaschine kann erfindungsgemäß ein Kleinkühlschrank, in den das Milchvolumen in Form eines Behälters in den kühlbaren Kühlraum eingestellt werden kann, verwendet werden. Die Kälteeinleitung zur Aufrechterhaltung der benötigten Lagertemperatur im Kühlraum kann über das Gehäuse erfolgen (Kühlmittelkreislauf oder peltierelementbasiert). Zusätzlich zu dieser Kältemaschine ist erfindungsgemäß eine Durchflusskühlanordnung als schnelle Abkühleinheit ausgebildet. In dieser kann die Milch aktiv mit einer Pumpe im Kreislauf gepumpt werden, bis sie herunter gekühlt ist. Dabei können die Kühlleitungen für das Gehäuse der Kältemaschinen die Durchflusskühlanordnung bzw. das Durchflusskühlelement (Kühlkörper) unmittelbar kühlen. Die Erfassung der Milchtemperatur im Milchvolumen kann über einen Temperatursensor erfolgen.

Die Durchflusskühlanordnung kann (passive Kühlung des Kühlkörpers, der dazu im Kühlraum oberhalb des Milchvolumens oder in einem kälteisolierten Gehäuse der Kältemaschine angeordnet ist) der Kältemaschine auch nachgeschaltet sein: Die Kältemaschine kühlt das Milchvolumen langsam herunter; bei Bezug einer Milchteilmenge wird letztere durch die Durchflusskühlanordnung einmalig hindurchgeleitet und dabei auf die ideale Zubereitungstemperatur herunter gekühlt.

Die Milchkühlvorrichtung kann auch um einen zusätzlichen Kältepuffer (wie beispielsweise einen Alublock oder dergleichen) erweitert werden, der ständig mitgekühlt wird und dessen Kältekapazität deutlich höher ist als die von nachgefüllter Milch. Wird der das Milchvolumen enthaltende Behälter im Kühlraum unmittelbar auf den Kältepuffer gestellt, so wird durch den direkten Kontakt eine noch schnellere Abkühlung erreicht. Eine noch schnellere Abkühlung lässt sich alternativ dazu oder in Kombination damit auch erreichen, wenn die Milch im Milchvolumen umgewälzt wird. Dies kann durch ein Rührwerk und/oder durch einen Vibrationsantrieb (Bewegen des Kältepuffers und somit des Behälters durch Vibration) erreicht werden. Eine solche Milchumwälzung kann auch durch Einzelimpulse erzeugt werden. Als Vibrationserzeuger kann ein elektrodynamischer Unwuchtantrieb, ein elektromagnetischer Vibrator oder ein piezoelektrischer Aktuator dienen.

Die vorliegende Erfindung hat gegenüber den aus dem Stand der Technik bekannten Vorrichtungen insbesondere die folgenden Vorteile:
- Es ist keine oder nur eine sehr gering erhöhte Kühlleistung vonnöten: Heutige (im Rahmen der Erfindung einsetzbare Kompressionskältemaschinen) haben durchschnittliche Einschaltdauern (des Kompressors) von 20% bis 30% derjenigen Zeit, in der die Kältemaschine arbeitet. Somit steht weitere Kühlleistung (die über das einfache Einschalten der Pumpe der Durchflusskühlanordnung genutzt werden kann) zur Verfügung, um die Durchflussschnellkühlung gemäß der Erfindung zu erzielen, ohne dass zusätzliche Aggregate oder eine wesentliche Leistungssteigerung des vorhandenen Systems benötigt wird. Die in der Regel geringfügige Erhöhung der durchschnittlichen Einschaltdauer des Kompressors von etwa 20% bis 30% der Gesamtzeit auf etwa 30% bis 40% der Gesamtzeit ist dabei in der Regel vernachlässigbar.
- Erfindungsgemäß kann eine schnellere Abkühlung der entnommenen Milchteilmenge und/oder des Milchvolumens auf ideale Vorrats- oder Zubereitungstemperaturen (zwischen 3°C und 7°C) erfolgen.
- Dabei wird keine zusätzliche oder überdimensionierte Kältemaschine (Kühlaggregat) benötigt.
- Die Energie-Effizienz eines solchen Systems ist im Falle des Nachfüllens warmer Milch gegenüber dem Stand der Technik deutlich verbessert: Wird beim Stand der Technik das Vorliegen eines zu warmen Kühlguts registriert, regelt das System die Einschaltdauer des Kompressors hoch, was zu einer deutlichen Reduzierung der Lufttemperatur im Kühlraum und damit zu erhöhten Kälteverlusten führt. Eine Durchflussschnellkühlung gemäß der Erfindung vermeidet die Notwendigkeit der Herabkühlung des gesamten Kühlraums.

Eine erfindungsgemäße Kaffeemaschine (insbesondere: Vollautomat) integriert als Baugruppe eine erfindungsgemäße Milchkühlvorrichtung. Ein erfindungsgemäßes Verfahren zum Milchkühlen wird mittels einer erfindungsgemäßen Milchkühlvorrichtung oder mittels einer erfindungsgemäßen Kaffeemaschine wie vorbeschrieben durchgeführt.

Nachfolgend wird die vorliegende Erfindung anhand von Ausführungsbeispielen beschrieben.

Die genaue konstruktive Ausführung des Wärmetauschers und der Milch- sowie der Kältemittelleitungen ist dabei lediglich beispielhaft zu verstehen. So können z. B. die Kältemittelleitungen als Rohre ausgebildet werden, ebenso aber z.B. auch als Rollbondverdampfer.

Dabei zeigen:
- Figur 1: ein erstes Ausführungsbeispiel.
- Figuren 2a und 2b: zwei Varianten des ersten Ausführungsbeispiels.
- Figuren 3a und 3b: zwei Varianten eines zweiten Ausführungsbeispiels.

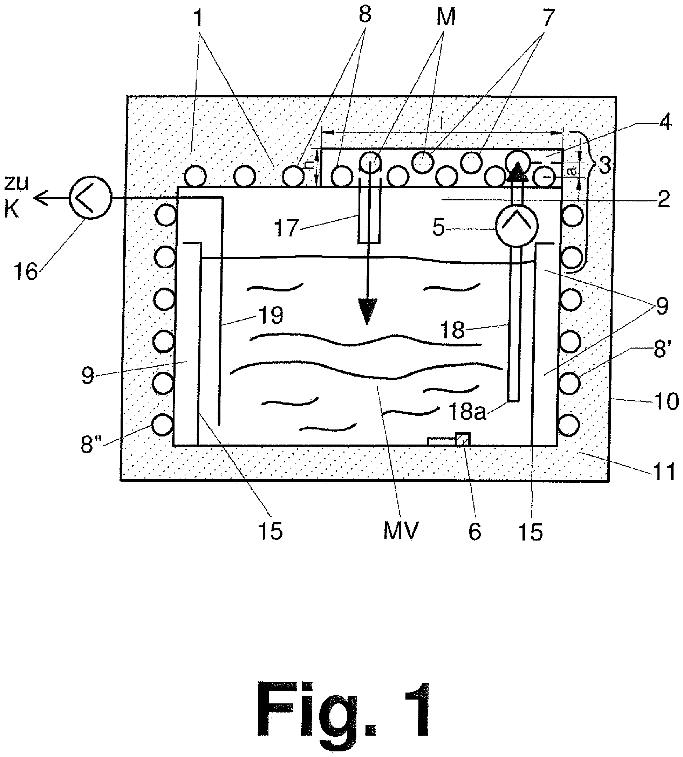

Figur 1 zeigt einen Schnitt durch eine erfindungsgemäße Milchkühlvorrichtung, die hier als separate Baugruppe, die also nicht in eine Kaffeemaschine K integriert ist, ausgebildet ist. Diese Milchkühlvorrichtung umfasst eine hier als Kompressionskältemaschine 1 ausgebildete Kältemaschine, die mit einem einen kühlbaren Kühlraum 2 umschließenden Gehäuse 10, das eine kälteisofierende Wandung 11 aufweist, versehen ist. Der zur Aufnahme eines externen Gefäßes 15, das hier nach oben offen ist und mit Milch gefüllt ist (und ein Füllvolumen im Bereiche - inklusiver der Grenzwerte - zwischen 1 Liter und 4 Liter umfasst), ausgebildete, von der Kältemaschine 1 kühlbare Kühlraum 2 ist über eine verschließbare Tür (nicht gezeigt) der Kältemaschine 1 zugänglich. Im gezeigten Zustand ist das externe Gefäß 15 samt der darin befindlichen Milch in den Kühlraum 2 eingebracht, so dass die im Gefäß 15 befindliche Milch ein zu kühlendes Milchvolumen MV darstellt. 9 bezeichnet den im Kühlraum 2 für das zu kühlende Milchvolumen MV (also das Gefäß 15 samt der darin befindlichen Milch) vorgesehenen Bereich (unterer Abschnitt des Innenvolumens des Kühlraums 2).

Nach dem Einbringen des Gefäßes 15 verbleibt im oberen Bereich des Kühlraums 2 ein vom Gefäß 15 bzw. der darin befindlichen Milch nicht beanspruchtes Leervolumen, in dem die Pumpe 5 der nachfolgend beschriebenen Durchflusskühlanordnung 3 positioniert ist. Diese Durchflusskühlanordnung 3 weist hier neben der Pumpe 5 einen aus massivem Aluminium ausgebildeten Kühlkörper 4 auf, der oberhalb des Kühlraums 2 in der kälteisolierten Gehäusewand 11 des Gehäuses 10 so angeordnet ist, dass seine Unterseite unmittelbar an die Oberseite des Kühlraums 2 angrenzt (oder alternativ als zum Kühlvolumen 2 hinweisender Innenwandabschnitt der kälteisolierten Wandung 11 ausgebildet ist). Der massive Kühlkörper 4 hat hier eine Größe (Länge x Breite x Höhe) von 150 mm x 90 mm x 25 mm, wobei seine Länge I seiner Ausdehnung in der in Figur 1 gezeigten Ebene und parallel zum oberen Ende des Kühlraums 2 entspricht, seine Höhe h seiner Ausdehnung senkrecht zu seiner Länge l (also senkrecht zur oberen Endfläche des Kühlraums 2) und in der gezeigten Ebene entspricht und seine Breite seiner Ausdehnung senkrecht zur Länge l und zur Höhe h (also in die Figurenebene hinein) entspricht. Auch ein runder Kühlkörper mit einem Durchmesser von 130 mm und einer Höhe von 25 mm ist möglich.

Die Kompressionskältemaschine 1 weist neben einem Kompressor, einem Verflüssiger, einer Drosseleinrichtung und einem Verdampfer ihres Kältemittelkreislaufs (diese Bauelemente sind nicht gezeigt) zwischen Drosseleinrichtung und Kompressor angeordnete Kältemittelleitungen 8, 8' und 8" auf. Die beiden Kältemittelleitungen 8' und 8" verlaufen in den seitlichen kälteisolierten Wandabschnitten 11 des Gehäuses 10 mäanderförmig (hier nur im Schnitt gezeigt) unmittelbar an den Seitenwandflächen des Kühlraums 2. Die Kältemittelleitung 8 verläuft unmittelbar angrenzend an die Deckenfläche des Kühlraums 2, ebenso mäanderförmig (nur im Schnitt gezeigt), sowie abschnittsweise im Inneren des Materials des massiven Kühlkörpers 4. Dazu wurde ein mäanderförmiger Leitungsverlauf in den Kühlkörper 4 eingefräst. Die Kältemittelleitungsabschnitte im Kühlkörper 4 verlaufen parallel zur Deckenfläche des Kühlraums 2 und (bis auf eine dünne Außenwandung des Aluminiumkörpers 4, die zum fluiddichten Abschluss dieser Leitungsabschnitte vonnöten ist) unmittelbar angrenzend an den oberen Innenraumbereich des Kühlraums 2. Ein mäanderförmiger Verlauf ist jedoch nicht notwendig; ebenso sind z. B. spiralförmige Leitungsverläufe möglich. Der Kühlkörper kann auch als Druckgussteil ausgebildet werden.

Ebenso wurde in den Kühlkörper 4 ein mäanderförmiger Leitungsverlauf für eine Leitung 7, die dem Durchleiten einer dem Milchvolumen MV vermittels der Pumpe 5 entnommenen Milchteilmenge M dient, eingefräst. Die Ebene des mäanderförmigen Verlaufs der Leitung 7 für die Milchteilmenge M verläuft oberhalb der Ebene, in dem die Kühlleitung 8 verläuft, parallel zu letzterer Ebene und in einem Abstand a zwischen 3 mm und 10 mm (inklusive der Grenzen) von letzterer Ebene. Der Leitungsdurchmesser der Leitung 7 im Inneren des Kühlkörpers 4 beträgt hier 5 mm, der Leitungsdurchmesser der Leitung 8 bzw. des Leitungsabschnitts der Kühlmittelleitung innerhalb des Kühlkörpers 4 beträgt hier 5 mm. Zwei unmittelbar benachbarte Leitungsabschnitte (in Längenrichtung l gesehen) im Mäander der Leitung 7 haben einen Abstand zwischen 10 mm und 15 mm (inklusive der Grenzen), zwei unmittelbar benachbart Leitungsabschnitte im Mäander der Leitung 8 (in Längenrichtung l) haben einen Abstand zwischen 10 mm und 15 mm (inklusive der Grenzen). Die Länge der Milchleitung 7 im Kühlkörper beträgt hier 0.5 m (bevorzugte Werte liegen zwischen 0.2 und 2 m, es sind aber auch andere Werte denkbar). Die Dimensionen des Kühlkörpers, die Leitungsquerschnitte und die Abstände korrelieren miteinander.

Ein durch die Pumpe 5 führender erster flexibler Schlauchabschnitt 18, dessen unteres Ende 18a etwa 5 mm oberhalb des Bodens des Gefäßes 15 endet, ist mit seinem gegenüberliegenden Ende mit dem Einlass der Leitung 7 im Kühlkörper 4 verbunden. Das dem Einlass abgewandte Ende der Leitung 7 im Kühlkörper 4 (Auslass der Milchleitung 7 aus dem Kühlkörper 4) ist mit einem starren, hier lediglich 2 cm langen, von oben ins Innere des Kühlraums 2 einragenden Auslassrohr 17 verbunden. Die Flexibilität des Schlauchabschnitts 18 stellt ein einfaches Einbringen desselben während des Einstellens des Gefäßes 15 in den Kühlraum 2 sicher. Das Milchansaugende 18a einerseits und das untere Ende des Auslassrohres 17 andererseits sind so positioniert, dass vermittels der Pumpe 5 eine Milchteilmenge M aus dem Milchvolumen MV angesaugt, durch die Leitung 7 im Kühlkörper 4 gepumpt und über das oberhalb des maximalen Füllvolumens im Behälter 15 endende Auslassrohr 17, also oberhalb des Flüssigkeitsniveaus des Milchvolumens MV wieder in den Kühlraum 2 hineingepumpt werden kann (so dass die vermittels der Leitung 8 im Kühlkörper 4 gekühlte Milchteilmenge M in das Milchvolumen MV zurückströmt). Somit ist eine Umlaufführung von Milchteilmengen M des Milchvolumens MV in einem Kreislauf zur schrittweisen Durchlaufkühlung dieses Volumens MV ermöglicht. Die dabei mit der Pumpe 5 in der Leitung 7 eingestellte Durchflussgeschwindigkeit beträgt zwischen 10 und 50 ml/s, bevorzugt zwischen 20 und 25 ml/s (inklusive der Grenzen). Die Fließgeschwindigkeit kann je nach Temperatur, Leitungslänge und Kühlkörper variieren.

Im Bodenbereich des Gefäßes 15 ist ein Temperatursensor 6 fixiert, der nach dem Einstellen des Gefäßes 15 in Eingriffskontakt mit einer zu einer zentralen Steuereinheit der Kältemaschine 1 (nicht gezeigt) führenden Signaldatenleitung gelangt. Über diese Signaldatenleitung können der zentralen Steuereinheit die vom Temperatursensor 6 am Milchvolumen MV erfassten, momentanen Milchtemperaturwerte übermittelt werden. Diese zentrale Steuereinheit steuert den Kompressor sowie die Drosseleinrichtung (Verdampfer) der Kältemaschine 1 ebenso wie die Pumpe 5 (insbesondere: die durch die Pumpe 5 eingestellte Durchflussgeschwindigkeit der Milchteilmenge M im Kanal 7) wie folgt: Wird mittels der vom Sensor 6 erfassten Temperaturwerte im Milchvolumen MV festgestellt, dass letzteres eine Temperatur oberhalb einer Zieltemperatur von 4°C aufweist (also eine Kühlung des Milchvolumens MV erfolgen soll), so wird die Pumpe 5 zyklisch und synchron zum zyklischen An- und Abschalten des Kompressors an- und abgeschaltet. Mit anderen Worten werden der Kompressor und die Pumpe 5 im selben Moment angeschaltet und, nach Ablauf eines definierten Zeitintervalls, gleichzeitig wieder abgeschaltet. Die Einschaltdauer von Pumpe und von Kompressor beträgt dabei 40% der Zeitdauer eines Zyklus (also des Zeitintervalls von einem Einschaltvorgang der Pumpe und des Kompressors bis zum nächsten Einschaltvorgang von Pumpe und Kompressor). Somit verlängert sich die durchschnittliche Einschaltdauer im Vergleich zu einer fehlenden Durchflusskühlung in der Durchflusskühlanordnung 3 (die etwa 30% der Zyklusdauer beträgt) um etwa ein Drittel auf 40%, was jedoch ohne weiteres und ohne Leistungssteigerung der vorhandenen Kältemaschine 1 realisierbar ist.

Unmittelbar an den Wandungen der Kühlleitung 8 im Kühlkörper 4 liegt beim Einschalten des Kompressors (und der Pumpe 5) eine Temperatur von etwa -5°C vor. Diese Temperatur verringert sich zum Ende des Zyklusintervalls auf etwa -15°C beim Ausschalten von Kompressor und Pumpe 5. Während dieses Zyklusintervalls wird somit durch Erwärmen des in der Leitung 8 strömenden Kühlmittels der gleichzeitig durch die Leitung 7 gepumpten Milchteilmenge Wärme entzogen.

Nach Beendigen der zusätzlichen, umlaufenden Durchlaufkühlung des Volumens MV in der Anordnung 3 (Sensor 6 ermittelt das Erreichen des Zielwertes von 4°C im Volumen MV), wird die Pumprichtung der Pumpe 5 invertiert, so dass in der Leitung 7 verbleibende Milchreste über den Schlauchabschnitt 18 und sein Ende 18a in das Milchvolumen MV zurückgepumpt werden können, ohne dass es über das Auslassrohr 17 zu einem dann unerwünschten Ansaugen von Milch aus dem Volumen MV kommt.

Durch den vorangehend beschriebenen Aufbau (sowie die Positionierung) des Kühlkörpers 4 erfolgt eine effiziente Durchlaufkühlung der Milchteilmenge M, ohne dass diese in der Leitung 7 einfriert.

Die Ableitung einer (durchlaufgekühlten) Menge an Milch aus dem Volumen MV zur an die gezeigte Milchkühlvorrichtung angeschlossenen, externen Kaffeemaschine K (nicht gezeigt) erfolgt über einen weiteren flexiblen Schlauchabschnitt 19, der vom Bodenbereich des Gefäßes 15 durch die kälteisolierte Wandung 11 des Gehäuses 10 hindurch in die Kaffeemaschine K führt. Eine außerhalb der Kältemaschine in dem weiteren flexiblen Schlauchabschnitt 19 angeordnete zweite Pumpe 16 pumpt die gewünschte Milchmenge zur Kaffeemaschine K.

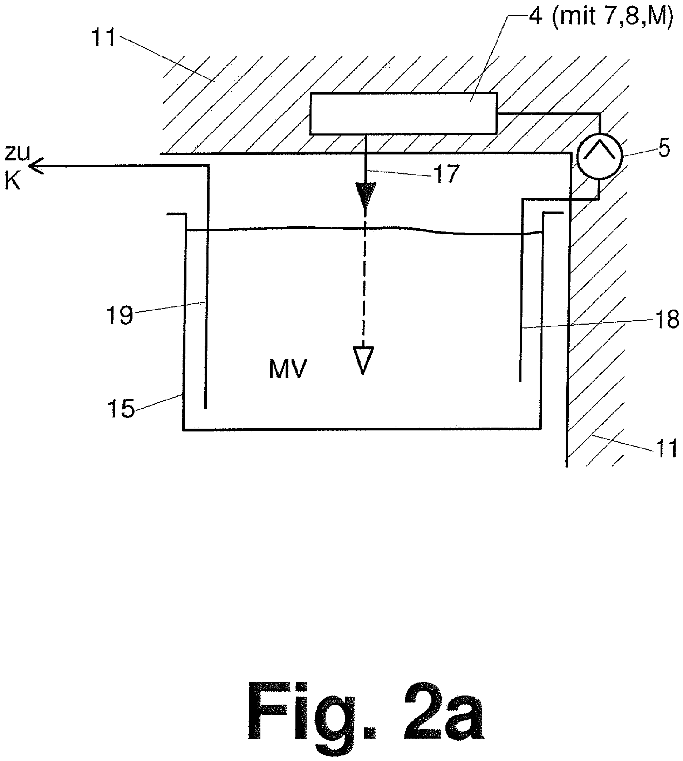

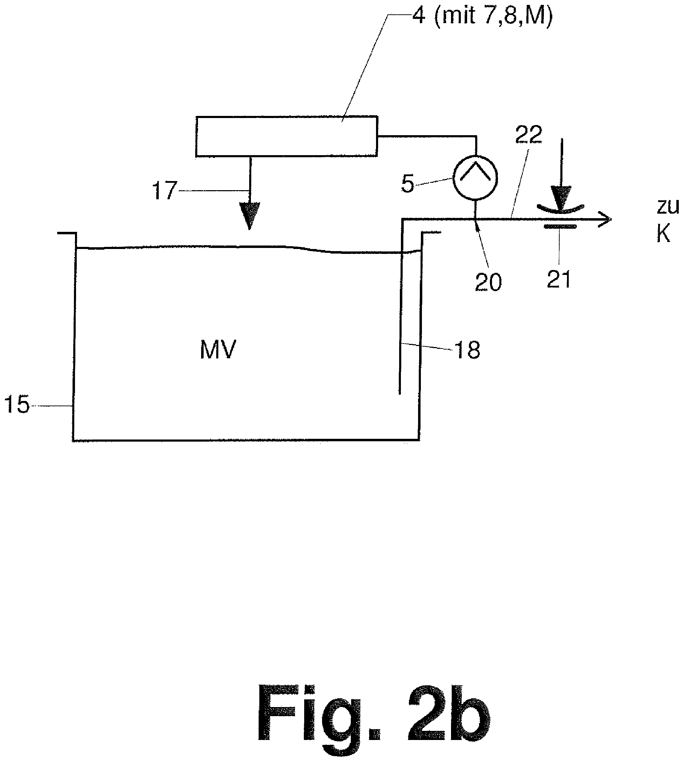

Die Figuren 2a und 2b zeigen zwei Varianten des in Figur 1 gezeigten ersten Ausführungsbeispiels. Nachfolgend sind daher jeweils nur die Unterschiede zur Figur 1 beschrieben (zudem sind nur einige der in Figur 1 gezeigten Bauelemente der Milchkühlvorrichtung gezeigt). Identische Bezugszeichen bezeichnen somit identische Bauelemente wie sie bereits in Figur 1 gezeigt sind.

In der in Figur 2a gezeigten Variante ist die Pumpe 5 nicht im Innenraum des Kühlraums 2 positioniert, sondern in der kälteisolierten Wandung 11 des Gehäuses 10 fest eingebaut (der erste flexible Schlauchabschnitt 18 führt somit in die Wandung 11 und mit einem dort fest eingebauten Abschnitt zur Pumpe 5 bzw. in letztere).

In der in Figur 2b gezeigten Variante ist im ersten Schlauchabschnitt 18 eine T-förmige Leitungsverzweigung 20 vorgesehen, die sich einerseits zur Pumpe 5 (und somit zum Kühlkörper 4) hin und andererseits zu einer zur externen Kaffeemaschine K führenden Auslassleitung 22 hin verzweigt. Die Umschaltung des durch die Pumpe 5 gesteuerten Milchflusses vom Durchpumpen von Milchteilmengen M durch den Kühlkörper 4 hin zur Milchausgabe über die Leitung 22 an die Kaffeemaschine K wird vermittels eines Umschaltelementes (Ventil 21) bewirkt. Beim Ventil 21 kann es sich um ein Klemmventil handeln, das auch zur Steuerung der Milchtemperatur genutzt werden kann. Das Ventil 21 verhindert ein Ansaugen von Luft über den Auslauf und Milch wird im Umlauf gepumpt. Ist das Ventil offen, kann der ein Milchschäumer der Kaffeemaschine K die Milch z.B. gemäß des Venturiprinzips ansaugen. Die Elemente 19 und 16 aus Figur 1 können dann entfallen.

Eine weitere Variante (nicht gezeigt) der Ausführungsform aus Fig. 2b (nachfolgend werden nur die Unterschiede zu Fig. 2b beschrieben) bildet die T-förmige Leitungsverzweigung 20 selbst als Umschaltelement (also z.B. als Ventil, insbesondere als Klemmventil) aus: Mittels dieses Umschaltelements kann der Milchfluss umschaltbar entweder zum Kühlkörper 4 hin oder zur externen Kaffeemaschine K hin geleitet werden. Die Pumpe 5 ist stromaufwärts des Umschaltelements in den ersten Schlauchabschnitt 18 (der flexibel oder starr ausgeführt sein kann) integriert.

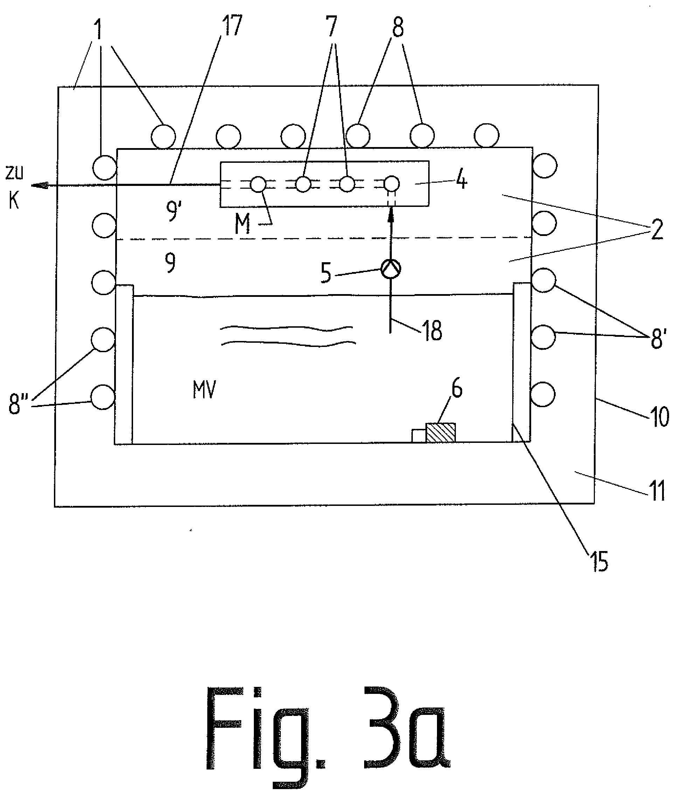

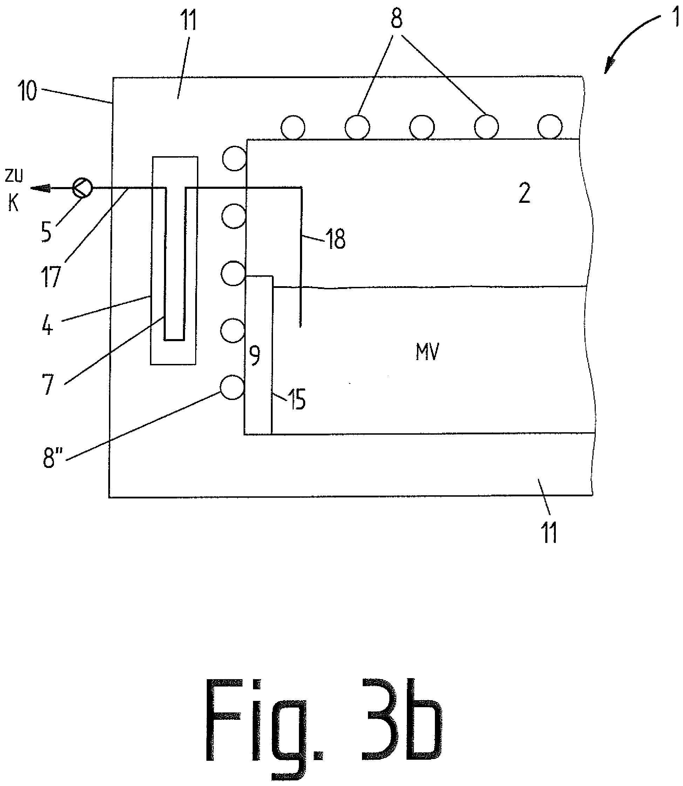

Figuren 3a (erste Variante) und 3b (zweite Variante) zeigen zwei Varianten eines zweiten Ausführungsbeispiels der vorliegenden Erfindung, bei dem keine aktive Kühlung des Kühlkörpers 4 durch eine im Inneren desselben verlaufenden Kühlleitung 8 erfolgt. Im Kühlkörper 4 verläuft somit ausschließlich die Leitung 7. Die mäanderförmige Kühlschlange der Leitung 8 liegt hier räumlich beabstandet vom Kühlkörper 4 in der kälteisolierten Wandung 11 des Gehäuses 10. (Auch hier beschreiben, im Vergleich zum in Figur 1 gezeigten Ausführungsbeispiel, identische Bezugszeichen identische bzw. sich entsprechende Bauelemente, so dass auch beim zweiten Ausführungsbeispiel bzw. den beiden Varianten desselben nur die Unterschiede beschrieben werden. Wiederum sind nicht alle Bauelemente in den Figuren 3a und 3b, die analog zu Figur 1 vorhanden sind, gezeigt.)

Die Beabstandung wird dadurch erzielt, dass der Kühlkörper 4 (mit der darin mäanderförmig verlaufenden Milchleitung 7) entweder in einem oberhalb des zum Einbringen des Volumens MV vorgesehenen Bereiches 9 des Kühlraums 2 liegenden Bereich 9' des Kühlraums 2 und im Inneren des Kühlraums 2 beabstandet von der Wandung 11 des Gehäuses 10 positioniert wird (erste Variante in Figur 3a) oder beabstandet von den Kühlmittelleitungen 8, 8' und 8" im Inneren der Kälteisolierung der die Kühlmittelleitung 8" integrierenden Seitenwandung 11 des Gehäuses 10 positioniert wird (zweite Variante in Figur 3b). In der ersten Variante (Figur 3a) führt das nunmehr verlängerte Auslassrohr 17 vom Ausgang der Leitung 7 im Kühlkörper 4 durch die Wandung 11 hindurch zur externen Kaffeemaschine K. Die Bauteile 16 und 19 aus Figur 1 entfallen somit. Gemäß Figur 3b (die lediglich einen Ausschnitt zeigt, in dem die Bauelemente 6 und 8' nicht gezeigt sind) führt der erste flexible Schlauchabschnitt 18 vom Volumen MV in die Wandung 11 und von dort in den Einlass der im Kühlkörper 4 mäanderförmig ausgebildeten Leitung 7. Das Auslassrohr 17 führt hier vom Ausgang der Leitung 7 aus dem Kühlkörper 4 über die hier außerhalb der Kältemaschine 1 bzw. des Gehäuses 10 derselben in das Auslassrohr 17 eingesetzte Pumpe 5. Auch hier dient die Pumpe 5 zum Ansaugen der Milch aus dem Milchvolumen MV über den ersten flexiblen Schlauchabschnitt 18 in die Leitung 7 im Kühlkörper 4. Auch der Weitertransport der im Kühlkörper 4 durch einmaligen Durchlauf gekühlten Milchteilmenge M zur Kaffeemaschine K erfolgt hier durch die Pumpe 5. (Selbstverständlich kann die Pumpe 5 auch im Inneren des Kühlraums 2 oder in der Wandung 11 in den flexiblen Schlauchabschnitt 18 integriert werden, also in Strömungsrichtung der Milchteilmenge gesehen vor dem Kühlkörper 4).

Der Abstand der Ebene des Mäanders der Leitung 7 von der Ebene des Mäanders der Leitung 8 (Figur 3a) bzw. 8" (Figur 3b) ist von untergeordneter Bedeutung. Es sollte kein Kontakt zur bestehen. Der Kühlkörper ist frei im Luftraum. Ein Einfrieren der in der Leitung 7 fließenden Milchteilmenge M kann so verhindert werden.

In den beiden gezeigten Varianten der Figuren 3a und 3b erfolgt somit eine passive Kühlung des ausschließlich die Leitung 7 integrierenden massiven Aluminiumkühlkörpers 4 durch die Innenluft im Kühlraum 2 (Figur 3a) bzw. durch den Übertrag von Kühlleistung von der Kühlleitung 8" über die kälteisolierte Wandung 11 des Gehäuses 10 (Figur 3b). Die Anordnung und Ausgestaltung des Kühlkörpers 4 erfolgt so, dass dieser (nach einmaligem Durchleiten der an die Kaffeemaschine K abzugebenden Milchteilmenge M) innerhalb von 30 Sekunden auf die Zieltemperatur von 4°C im Inneren des Kühlraums 2 abgekühlt wird (die Kühlung der Milchteilmenge M in der Leitung 7 erwärmt ja gleichzeitig den Kühlkörper 4). Diese Zeit entspricht in etwa der minimalen Zeit, die ein Benutzer der Kaffeemaschine K zwischen dem Anfordern zweier unterschiedlicher Kaffeespezialitäten benötigt (sofern man von einer entnommenen Milchteilmenge M von beispielsweise 100 ml ausgeht). Die Bauelemente der gezeigten Varianten sind so aufeinander abgestimmt, dass auch eine Milchteilmenge M aus einem Milchvolumen MV, dessen Temperatur nahe der Zimmertemperatur von 20°C liegt, aus dem Milchvolumen MV entnommen und in der Leitung 7 ausreichend abgekühlt werden kann, bevor die Milchteilmenge M die Kaffeemaschine K erreicht.

## Patentansprüche

1. Milchkühlvorrichtung zum Einsatz in oder mit einem Getränkebereiter, insbesondere einer Kaffeemaschine (K), insbesondere einem Kaffeevollautomaten, mit
einer Kältemaschine (1) und einem von dieser Kältemaschine (1) kühlbaren Kühlraum (2), in den ein zu kühlendes Milchvolumen (MV) einbringbar ist, und
einer Durchflusskühlanordnung (3), die ein zum Abkühlen einer hindurchgeleiteten Flüssigkeitsmenge ausgebildetes Durchflusskühlelement (4) aufweist und mit der dem Milchvolumen (MV) eine Teilmenge der Milch des Milchvolumens (Milchteilmenge M) entnehmbar und durch das Durchflusskühlelement (4) wieder in das jenige Milchvolumen (MV) hindurchleitbar ist,
wobei das Durchflusskühlelement (4) so angeordnet und ausgestaltet ist, dass es durch die Kältemaschine (1) abkühlbar ist.

2. Milchkühlvorrichtung nach dem vorhergehenden Anspruch
***dadurch gekennzeichnet, dass***
das Durchflusskühlelement (4) ein vorzugsweise massiver Kühlkörper, der bevorzugt Kupfer und/oder Aluminium und/oder mindestens eine Legierung davon enthält oder daraus besteht, ist, durch den mindestens eine Leitung (7) hindurch gelegt ist, bevorzugt mäanderförmig hindurch gelegt ist, die dem Durchleiten der Milchteilmenge (M) durch den Kühlkörper dient.

3. Milchkühlvorrichtung nach einem der vorhergehenden Ansprüche ***dadurch gekennzeichnet, dass***
die Durchflusskühlanordnung (3) eine Pumpe (5) umfasst, mit der die Milchteilmenge (M) aus dem Milchvolumen (MV) entnehmbar, durch das Durchflusskühlelement (4) hindurch pumpbar und aus dem Durchflusskühlelement (4) entweder wieder dem Milchvolumen (MV) zuleitbar (17) ist oder der Kaffeemaschine (K) oder einer zum Abgeben von Flüssigkeit in ein externes Gefäß ausgebildeten Ausgabe derselben zuleitbar ist.

4. Milchkühlvorrichtung nach einem der vorhergehenden Ansprüche ***dadurch gekennzeichnet, dass***
die Durchflusskühlanordnung (3) einen Temperatursensor (6) zum Erfassen der Temperatur im Milchvolumen (MV) umfasst, wobei die Durchflusskühlanordnung (3), insbesondere eine/die Pumpe (5) derselben, anhand der erfassten Temperatur steuerbar ist.

5. Milchkühlvorrichtung nach einem der vorhergehenden Ansprüche ***dadurch gekennzeichnet, dass***
die Kältemaschine (1) eine Kompressionskältemaschine ist oder aufweist, also einen Kompressor, einen Verflüssiger, eine Drosseleinrichtung und einen Verdampfer für einen Kältemittelkreislauf aufweist, oder
dass die Kältemaschine (1) eine mindestens ein Peltierelement zum Kühlen des Kühlraums (2) aufweisende Kältemaschine ist.

6. Milchkühlvorrichtung nach dem vorhergehenden Anspruch
***dadurch gekennzeichnet, dass***
das Durchflusskühlelement (4) ein vorzugsweise massiver Kühlkörper, der bevorzugt Kupfer und/oder Aluminium und/oder mindestens eine Legierung davon enthält oder daraus besteht, ist, durch den mindestens eine Leitung (7) hindurch gelegt ist, bevorzugt mäanderförmig hindurch gelegt ist, die dem Durchleiten der Milchteilmenge (M) durch den Kühlkörper dient, und
dass durch den Kühlkörper neben der mindestens einen Leitung (7) zum Durchleiten der Milchteilmenge (M) auch mindestens eine zwischen Drosseleinrichtung und Kompressor der Kompressionskältemaschine angeordnete Kältemittelleitung (8) zumindest abschnittsweise hindurch gelegt ist, bevorzugt mäanderförmig hindurch gelegt ist,
dass also das den Kühlkörper sowie die hindurch gelegte Leitung (7) und den/die hindurch gelegten Kältemittelleitungsabschnitt(e) umfassende Durchflusskühlelement (4) als Wärmetauscher ausgebildet ist.

7. Milchkühlvorrichtung nach dem vorhergehenden Anspruch
***dadurch gekennzeichnet, dass***
mindestens eine, bevorzugt mehrere, besonders bevorzugt alle der folgenden Eigenschaften realisiert sind:
• der mittlere Abstand im Kühlkörper zwischen der mindestens einen hindurch gelegten Leitung (7) zum Durchleiten der Milchteilmenge (M) einerseits und der mindestens einen zumindest abschnittsweise hindurch gelegten Kältemittelleitung (8) andererseits beträgt zwischen 0.1 mm und 10 mm, bevorzugt zwischen 3 mm und 5 mm, jeweils inklusive der genannten Grenzwerte
• der Leitungsdurchmesser der Leitung (7) zum Durchleiten der Milchteilmenge (M) und/oder der mindestens einen Kältemittelleitung (8) beträgt zwischen 2 mm und 8 mm, bevorzugt zwischen 4 mm und 5 mm, jeweils inklusive der genannten Grenzwerte,
• die Pumpe (5) ist auf eine Fließgeschwindigkeit der Milchteilmenge (M) in der Leitung (7) zwischen 5 und 50 ml/s, bevorzugt zwischen 10 und 20 ml/s, jeweils inklusive der genannten Grenzwerte, einstellbar,
• mittels des Kompressors ist das Temperaturverhalten des Kältemittels in der Kältemittelleitung (8) so steuerbar, dass ein Absinken der Temperatur der sich während des Hindurchleitens im Kühlkörper befindenden Milchteilmenge (M) unter eine vorbestimmten minimale Temperatur, die bevorzugt zwischen 3° und 7°, besonders bevorzugt 4°, beträgt und/oder ein Einfrieren der sich während des Hindurchleitens im Kühlkörper befindenden Milchteilmenge (M) verhindert wird.

8. Milchkühlvorrichtung nach einem der Ansprüche 1 bis 5
***dadurch gekennzeichnet, dass***
das Durchflusskühlelement (4) ein vorzugsweise massiver Kühlkörper, der bevorzugt Kupfer und/oder Aluminium und/oder mindestens eine Legierung davon enthält oder daraus besteht, ist, durch den mindestens eine Leitung (7) hindurch gelegt ist, bevorzugt mäanderförmig hindurch gelegt ist, die dem Durchleiten der Milchteilmenge (M) durch den Kühlkörper dient,
dass durch den Kühlkörper neben der mindestens einen Leitung (7) zum Durchleiten der Milchteilmenge (M) keine weitere Leitung, insbesondere keine Kältemittelleitung, hindurch gelegt ist, und
dass der Kühlkörper entweder im Inneren des Kühlraums (2), jedoch außerhalb eines zum Einbringen des zu kühlenden Milchvolumens (MV) vorgesehenen Bereiches (9), insbesondere oberhalb dieses Bereiches (9), positioniert ist oder dass der Kühlkörper außerhalb des Kühlraums (2), bevorzugt im Gehäuse (10) der Kältemaschine, insbesondere innerhalb einer kälteisolierten Wandung (11) dieses Gehäuses (10), positioniert ist.

9. Milchkühlvorrichtung nach dem vorhergehenden Anspruch
***dadurch gekennzeichnet, dass***
mindestens eine, besonders bevorzugt beide der folgenden Eigenschaften realisiert sind:
• der Leitungsdurchmesser der Leitung (7) zum Durchleiten der Milchteilmenge (M) beträgt zwischen 2 mm und 8 mm, bevorzugt zwischen 4 mm und 5 mm, jeweils inklusive der genannten Grenzwerte,
• die Pumpe (5) ist auf eine Fließgeschwindigkeit der Milchteilmenge (M) in der Leitung (7) von zwischen 5 und 50 ml/s, bevorzugt zwischen 10 und 20 ml/s, jeweils inklusive der genannten Grenzwerte, einstellbar.

10. Getränkebereiter, insbesondere Kaffeemaschine (K), insbesondere Kaffeevollautomat,
***dadurch gekennzeichnet, dass***
der Getränkebereiter eine bevorzugt in den Getränkebereiter integrierte Milchkühlvorrichtung oder eine als Beistellkühler ausgebildete Milchkühlvorrichtung nach einem der vorhergehenden Ansprüche aufweist.

## Claims

1. A milk cooling device for use in or with a beverage preparing device, in particular a coffee machine (K), in particular a fully automatic coffee maker, with
a refrigerating machine (1) and a cooling chamber (2) which can be cooled by this refrigerating machine (1), into which chamber a volume of milk (MV) which is to be cooled can be introduced, and
a throughflow cooling arrangement (3) which has a throughflow cooling element (4) designed for cooling a quantity of liquid which is passed through, and with which a partial quantity of the milk of the volume of milk (partial milk quantity M) can be taken from the volume of milk (MV) and can be passed through the throughflow cooling element (4) again into this volume of milk (MV),
wherein the throughflow cooling element (4) is arranged and configured in such a way that it can be cooled by the refrigerating machine (1).

2. A milk cooling device according to the preceding claim,
**characterised in that**
the throughflow cooling element (4) is a preferably solid cooling body which preferably contains or consists of copper and/or aluminium and/or at least one alloy thereof, through which at least one line (7) is laid, preferably is laid in a meander therethrough, which serves to pass the partial milk quantity (M) through the cooling body.

3. A milk cooling device according to one of the preceding claims,
**characterised in that**
the throughflow cooling arrangement (3) comprises a pump (5), with which the partial milk quantity (M) can be taken from the volume of milk (MV), can be pumped through the throughflow cooling element (4), and from the throughflow cooling element (4) either can be fed (17) to the volume of milk (MV) again or can be fed to the coffee machine (K) or an output thereof designed for discharging liquid into an external vessel.

4. A milk cooling device according to one of the preceding claims,
**characterised in that**
the throughflow cooling arrangement (3) comprises a temperature sensor (6) for detecting the temperature in the volume of milk (MV), the throughflow cooling arrangement (3), in particular a/the pump (5) thereof, being controllable using the detected temperature.

5. A milk cooling device according to one of the preceding claims,
**characterised in that**
the refrigerating machine (1) is or has a compression refrigerating machine, i.e. has a compressor, a condenser, a throttle means and an evaporator for a coolant circuit,
or
**in that** the refrigerating machine (1) is a refrigerating machine having at least one Peltier element for cooling the cooling chamber (2).

6. A milk cooling device according to the preceding claim,
**characterised in that**
the throughflow cooling element (4) is a preferably solid cooling body which preferably contains or consists of copper and/or aluminium and/or at least one alloy thereof through which at least one line (7) is laid, preferably is laid in a meander therethrough, which serves to pass the partial milk quantity (M) through the cooling body, and
**in that** in addition to the at least one line (7) for passing through the partial milk quantity (M) also at least one coolant line (8) arranged between the throttle means and compressor of the compression refrigerating machine is laid at least in portions through the cooling body, preferably is laid in a meander therethrough,
**in that** the throughflow cooling element (4) comprising the cooling body and the line (7) laid therethrough and the coolant line portion(s) laid therethrough is therefore designed as a heat exchanger.

7. A milk cooling device according to the preceding claim,
**characterised in that**
at least one, preferably a plurality, particularly preferably all, of the following properties are realised:
• the average distance in the cooling body between the at least one line (7) which is laid therethrough for passing through the partial milk quantity (M) on one hand and the at least one coolant line (8) laid therethrough at least in portions on the other hand is between 0.1 mm and 10 mm, preferably between 3 mm and 5 mm, including the named limit values in each case,
• the line diameter of the line (7) for passing through the partial milk quantity (M) and/or the at least one coolant line (8) is between 2 mm and 8 mm, preferably between 4 mm and 5 mm, including the named limit values in each case,
• the pump (5) can be set to a flow rate of the partial milk quantity (M) in the line (7) of between 5 and 50 ml/s, preferably between 10 and 20 ml/s, including the named limit values in each case,
• the thermal behaviour of the refrigerant in the coolant line (8) can be controlled by means of the compressor such that lowering of the temperature of the partial milk quantity (M) located in the cooling body during the passing-through to below a predetermined minimum temperature, which is preferably between 3° and 7°, particularly preferably 4°, and/or freezing of the partial milk quantity (M) located in the cooling body during the passing-through is prevented.

8. A milk cooling device according to one of Claims 1 to 5,
**characterised in that**
the throughflow cooling element (4) is a preferably solid cooling body which preferably contains or consists of copper and/or aluminium and/or at least one alloy thereof, through which at least one line (7) is laid, preferably is laid in a meander therethrough, which serves to pass the partial milk quantity (M) through the cooling body,
**in that** no further line, in particular no coolant line, is laid through the cooling body in addition to the at least one line (7) for passing through the partial milk quantity (M), and **in that** the cooling body is positioned either in the interior of the cooling chamber (2), but outside a region (9) provided for introducing the volume of milk (MV) to be cooled, in particular above this region (9), or **in that** the cooling body is positioned outside the cooling chamber (2), preferably in the housing (10) of the refrigerating machine, in particular within a cold-insulated wall (11) of this housing (10).

9. A milk cooling device according to the preceding claim,
**characterised in that**
at least one, particularly preferably both, of the following properties are realised:
• the line diameter of the line (7) for passing through the partial milk quantity (M) is between 2 mm and 8 mm, preferably between 4 mm and 5 mm, including the named limit values in each case,
• the pump (5) can be set to a flow rate of the partial milk quantity (M) in the line (7) of between 5 and 50 ml/s, preferably between 10 and 20 ml/s, including the named limit values in each case.

10. A beverage preparing device, in particular coffee machine (K), in particular fully automatic coffee maker,
**characterised in that**
the beverage preparing device has a milk cooling device preferably integrated in the beverage preparing device, or a milk cooling device, designed as a standalone cooler, according to one of the preceding claims.

## Revendications

1. Dispositif de refroidissement de lait destiné à être utilisé dans ou avec un dispositif de préparation de boissons, en particulier une machine à café (K), en particulier une machine à café entièrement automatique, avec
une machine frigorifique (1) et une chambre de refroidissement (2) pouvant être refroidie par cette machine frigorifique (1) et dans laquelle un volume de lait (MV) à refroidir peut être mis en place, et
un dispositif de refroidissement par écoulement (3) qui présente un élément de refroidissement par écoulement (4) constitué pour le refroidissement d'une quantité de liquide introduite et avec lequel une quantité partielle de lait du volume de lait (quantité partielle de lait M) peut être prélevée à partir du volume de lait (MV) et peut être réintroduite à travers l'élément de refroidissement par écoulement (4) dans ce volume de lait (MV) respectif,
l'élément de refroidissement par écoulement (4) étant disposé et constitué de telle sorte qu'il peut être refroidi par la machine frigorifique (1).

2. Dispositif de refroidissement de lait selon la revendication précédente,
***caractérisé en ce que***
l'élément de refroidissement par écoulement (4) est un corps de refroidissement de préférence massif qui contient de préférence du cuivre et/ou de l'aluminium et/ou au moins un alliage de ceux-ci ou qui est composé de ceux-ci, à travers lequel au moins une conduite (7) est placée, de préférence est placée de façon sinueuse, qui sert à transporter la quantité partielle de lait (M) à travers le corps de refroidissement.

3. Dispositif de refroidissement de lait selon l'une des revendications précédentes, ***caractérisé en ce que***
le dispositif de refroidissement par écoulement (3) comprend une pompe (5) avec laquelle la quantité partielle de lait (M) peut être prélevée à partir du volume de lait (MV), peut être pompée à travers l'élément de refroidissement par écoulement (4) et peut, à partir de l'élément de refroidissement par écoulement (4), soit être réacheminée (17) vers le volume de lait (MV), soit être acheminée vers la machine à café (K) ou vers une sortie de celle-ci pour la délivrance du liquide dans un récipient externe.

4. Dispositif de refroidissement de lait selon l'une des revendications précédentes, ***caractérisé en ce que***
le dispositif de refroidissement par écoulement (3) comprend un capteur de température (6) pour la détection de la température dans le volume de lait (MV), le dispositif de refroidissement par écoulement (3), en particulier une/la pompe (5) de celui-ci, pouvant être commandé à l'aide de la température détectée.

5. Dispositif de refroidissement de lait selon l'une des revendications précédentes, ***caractérisé en ce que***
la machine frigorifique (1) est ou présente une machine frigorifique à compression, donc un compresseur, un condenseur, un dispositif d'étranglement et un évaporateur pour un circuit de réfrigérant,
ou
**en ce que** la machine frigorifique (1) est une machine frigorifique présentant au moins un élément Peltier destiné au refroidissement de la chambre de refroidissement (2).

6. Dispositif de refroidissement de lait selon la revendication précédente,
***caractérisé en ce que***
l'élément de refroidissement par écoulement (4) est un corps de refroidissement de préférence massif qui contient de préférence du cuivre et/ou de l'aluminium et/ou au moins un alliage de ceux-ci ou qui est composé de ceux-ci, à travers lequel au moins une conduite (7) est placée, de préférence est placée de façon sinueuse, qui sert à transporter la quantité partielle de lait (M) à travers le corps de refroidissement, et
**en ce que**, outre la conduite (7) au moins au nombre de un destinée à transporter la quantité partielle de lait (M), au moins une conduite de réfrigérant (8) disposée entre le dispositif d'étranglement et le compresseur de la machine frigorifique à compression est également placée, de préférence est placée sous une forme sinueuse, au moins par tronçons à travers le corps de refroidissement,
**en ce que** donc l'élément de refroidissement par écoulement (4) comprenant le corps de refroidissement ainsi que la conduite (7) placée à travers et le tronçon/les tronçons de conduite de réfrigérant placé(s) à travers est constitué en tant qu'échangeur de chaleur.

7. Dispositif de refroidissement de lait selon la revendication précédente,
***caractérisé en ce***
**qu'**au moins une, de préférence plusieurs, de façon particulièrement préférée toutes les caractéristiques suivantes sont réalisées :
• la distance moyenne dans le corps de refroidissement entre la conduite (7) au moins au nombre de un placée à travers et destinée à transporter la quantité partielle de lait (M) d'une part et la conduite de réfrigérant (8) au moins au nombre de un placée à travers au moins par tronçons d'autre part est comprise entre 0,1 mm et 10 mm, de préférence entre 3 mm et 5 mm, y compris respectivement les valeurs limites citées
• le diamètre de conduite de la conduite (7) destinée à transporter la quantité partielle de lait (M) et/ou de la conduite de réfrigérant (8) au moins au nombre de un est compris entre 2 mm et 8 mm, de préférence entre 4 mm et 5 mm, y compris respectivement les valeurs limites citées,
• la pompe (5) peut être réglée à une vitesse d'écoulement de la quantité partielle de lait (M) dans la conduite (7) entre 5 et 50 ml/s, de préférence entre 10 et 20 ml/s, y compris respectivement les valeurs limites citées,
• au moyen du compresseur, le comportement en température du réfrigérant dans la conduite de réfrigérant (8) peut être commandé de telle sorte qu'un abaissement de la température de la quantité partielle de lait (M) qui se trouve dans le corps de refroidissement pendant le transport au-dessous d'une température minimale prédéfinie qui est comprise de préférence entre 3° et 7°, de façon particulièrement préférée qui est égale à 4°, et/ou un gel de la quantité partielle de lait (M) qui se trouve dans le corps de refroidissement pendant le transport est empêché.

8. Dispositif de refroidissement de lait selon l'une des revendications 1 à 5,
***caractérisé en ce que***
l'élément de refroidissement par écoulement (4) est un corps de refroidissement de préférence massif qui contient de préférence du cuivre et/ou de l'aluminium et/ou au moins un alliage de ceux-ci ou qui est composé de ceux-ci, à travers lequel au moins une conduite (7) est placée, de préférence est placée de façon sinueuse, qui sert à transporter la quantité partielle de lait (M) à travers le corps de refroidissement,
**en ce que**, outre la conduite (7) au moins au nombre de un destinée à transporter la quantité partielle de lait (M), aucune autre conduite, en particulier aucune conduite de réfrigérant, n'est placée à travers, et
**en ce que** le corps de refroidissement est positionné soit à l'intérieur de la chambre de refroidissement (2), mais à l'extérieur d'une zone (9) prévue pour la mise en place du volume de lait (MV) à refroidir, en particulier au-dessus de cette zone (9), ou **en ce que** le corps de refroidissement est positionné à l'extérieur de la chambre de refroidissement (2), de préférence dans le carter (10) de la machine frigorifique, en particulier à l'intérieur d'une paroi (11), isolée vis-à-vis du froid, de ce carter (10).

9. Dispositif de refroidissement de lait selon la revendication précédente,
***caractérisé en ce***
**qu'**au moins une, de façon particulièrement préférée les deux caractéristiques suivantes sont réalisées :
• le diamètre de conduite de la conduite (7) destinée à transporter la quantité partielle de lait (M) est compris entre 2 mm et 8 mm, de préférence entre 4 mm et 5 mm, y compris respectivement les valeurs limites citées,
• la pompe (5) peut être réglée à une vitesse d'écoulement de la quantité partielle de lait (M) dans la conduite (7) entre 5 et 50 ml/s, de préférence entre 10 et 20 ml/s, y compris respectivement les valeurs limites citées.

10. Dispositif de préparation de boissons, en particulier une machine à café (K), en particulier une machine à café entièrement automatique,
***caractérisé en ce que***
le dispositif de préparation de boissons présente un dispositif de refroidissement de lait intégré de préférence dans le dispositif de préparation de boissons ou un dispositif de refroidissement de lait constitué en tant que refroidisseur d'appoint selon l'une des revendications précédentes.
